Europäisches Patentamt

European Patent Office

Office européen des brevets

(11) Veröffentlichungsnummer: **0 319 642 B1**

(12)

# EUROPÄISCHE PATENTSCHRIFT

(45) Veröffentlichungstag der Patentschrift:
20.03.91 Patentblatt 91/12

(51) Int. Cl.⁵: **B67B 3/062, B65G 37/00**

(21) Anmeldenummer: **88107476.9**

(22) Anmeldetag: **10.05.88**

(54) Verfahren zum Überführen von Sektflaschendrahtbügeln von einer Drahtbügelaufgabestation zu einer Weiterverarbeitungsstation.

(43) Veröffentlichungstag der Anmeldung:
14.06.89 Patentblatt 89/24

(45) Bekanntmachung des Hinweises auf die
Patenterteilung:
20.03.91 Patentblatt 91/12

(84) Benannte Vertragsstaaten:
**DE ES FR IT**

(56) Entgegenhaltungen:
**EP-A- 0 256 403
FR-A- 2 132 247
US-A- 3 123 198**

(73) Patentinhaber: **Draht- und Metallwarenfabrik
Phillip Schneider GmbH & Co.
Speckerbrücke 2
W-6552 Bad Münster-Ebernburg 1 (DE)**

(72) Erfinder: **Niebling, Heinz, Dipl.-Ing. F.H.
Am Pfalzsprung 10
W-6552 Bad Münster-Ebernburg (DE)**

(74) Vertreter: **Quermann, Helmut, Dipl.-Ing.
Postfach 6145 Gustav-Freytag-Strasse 25
W-6200 Wiesbaden (DE)**

## Beschreibung

Die Erfindung betrifft ein Verfahren zum Überführen von Sektflaschendrahtbügeln von einer Drahtbügelaufgabestation zu einer Weiterverarbeitungsstation.

Sektflaschendrahtbügel dienen dem Sichern von in Sektflaschen eingesteckten Sektkorken, sie sind in aller Regel als Bügelverschluß oder vierdrahtverschluß ausgebildet. Üblicherweise werden die Sektflaschendrahtbügel in Automaten aus Blechbändern und/oder Drähten hergestellt, sie verlassen diese Herstellungsstation in ungeregeltem Zustand und erfahren erst anschließend eine geregelte Zusammenstellung, beispielsweise in Form einer Reihe. Derartig gesammelte Sektflaschendrahtbügel werden so vom Hersteller in Behältnisse, insbesondere in Kartons, oder mittels tablettartiger Transporteinheiten, auf Paletten verpackt und an die Sekt produzierende Industrie vertrieben. Dort werden die Sektflaschendrahtbügel in aller Regel reihenweise aus den Behältnissen entnommen und eine Drahtbügelaufgabestation mit diesen beschickt, eine beispielsweise einer verschließvorrichtung für die Flaschen zugeordnete Entnahmevorrichtung entnimmt dann einzeln die im Bereich einer Drahtbügelentnahmestation aufgestauten Drahtbügel und führt sie der verschließvorrichtung zu, die in aller Regel mit der Füllvorrichtung für die Flaschen zusammenwirkt.

Das beschriebene verfahren ist beispielsweise aus der EP-0 256 403 A2 bekannt. Dort ist eine an der Unterseite einen Elektromagneten aufweisende Greifeinrichtung beschrieben, die in eine Position oberhalb der in den Behältnissen angeordneten Sektflaschendrahtbügel verfahrbar und auf diese absenkbar ist und mit der bei Aktivierung des Elektromagneten jeweils eine Reihe von Sektflaschendrahtbügeln angehoben und zu einer parallel angeordneten Führungsbahn verfahren werden kann, die nach Ablage der Sektflaschendrahtbügel auf dieser auf der horizontalen Position in eine geneigte Stellung überführt wird, so daß die Reihe von Sektflaschendrahtbügeln zur Drahtbügelentnahmestation rutschen und damit die Entnahmevorrichtung einen Sektflaschendrahtbügel nach dem anderen der Verschließvorrichtung zuführen kann. Nachteilig ist bei dem bekannten verfahren, daß dort zum Überführen der Sektflaschendrahtbügel eine räumliche Nähe zwischen der Drahtbügelaufgabestation und der Drahtbügelentnahmestation sowie der dieser zugeordneten Entnahmevorrichtung, die ihrerseits mit der Verschließvorrichtung zusammenwirkt, erforderlich ist. So ist es wegen der Übergabe der Sektflaschendrahtbügel mittels der Schräge praktisch nicht möglich, die Drahtbügelaufgabestation und die Drahtbügelentnahmestation weit beabstandet voneinander anzuordnen, geschweige denn die der Drahtbügelaufgabestation nachgeschaltete Drahtbügelentnahmestation oberhalb dieser. Aus der EP 0 256 A2 ist es ferner bekannt, die Sektflaschendrahtbügel statt auf eine aus einer waagerechten Position neigbare Führungsbahn auf einen waagerechten Förderabschnitt einer Kettenfördervorrichtung aufzulegen und zum Überführen der Sektflaschendrahtbügel in die Weiterbearbeitungsstation der Kettenfördervorrichtung eine Abführbahn nachzuordnen, von der aus sie in die Weiterbearbeitungsstation rutschen. In diesem Zusammenhang ist es grundsätzlich bekannt, Sektflaschendrahtbügel in eine geregelte Anordnung in Form einer Reihe zu überführen, in dem sie gegen einen bewegbaren Anschlag rutschen.

Es ist Aufgabe vorliegender Erfindung, ein Verfahren zum Überführen von Sektflaschendrahtbügeln von einer Drahtbügelaufgabestation zu einer Weiterverarbeitungsstation zu schaffen, mit dem eine Überführung der Sektflaschendrahtbügel von der Drahtbügelaufgabestation zu der beliebig bezüglich dieser plazierten Weiterverarbeitungsstation möglich ist.

Erfindungsgemäß wird ein Verfahren zum Überführen von Sektflaschendrahtbügeln von einer Drahtbügelaufgabestation zu einer Weiterverarbeitungsstation mittels eines Transportbandes vorgeschlagen, wobei die Drahtbügel mittels einer der Drahtbügelaufgabestationen zugeordneten Beschickungsvorrichtung taktweise auf das Transportband aufgesetzt werden, das Transportband kontinuierlich angetrieben wird und die Drahtbügel im Bereich der Weiterverarbeitungsstation aufgestaut und von einer der Weiterverarbeitungsstation zugeordneten Entnahmevorrichtung taktweise vom Transportband entnommen werden, und wobei zwischen der taktweisen Aufgabe der Drahtbügel auf das Transportband und deren taktweisen Entnahme von diesem ein kontinuierlicher, lückenloser Förderverlauf erfolgt.

In diesem Zusammenhang gesehen ist es selbstverständlich bekannt, Massengüter, wie Beispielsweise Dosen, mittels eines Transportbandes zu fördern. Das Besondere der vorliegenden Erfindung ist aber im Unterschied hierzu darin zu sehen, daß es sich bei Sektflaschendrahtbügeln um Massengüter handelt, die ineinandergesteckt sind und die taktweise aus der Drahtbügelaufgabestation ausgegeben werden und gleichfalls taktweise von der Weiterverarbeitungsstation in Form der Drahtbügelentnahmestation manipuliert werden, bei gleichzeitiger kontinuierlicher Bewegung des Transportbandes. Um zu einem kontinuierlichen Produktionsfluß der Sektflaschen zu gelangen, muß daher die Geschwindigkeit des Transportbandes größer sein als die Fördergeschwindigkeit der Sektflaschendrahtbügel, die sich aufgrund deren Anstau im Bereich der Weiterverarbeitungsstation einstellt. Hierzu unterscheidet sich die Erfindung von bekannten verfahren zum Überführen von Massengütern, bei denen grundsätzlich die Massengüter, abgesehen von einem eventuellen Aufstaubereich in der Nähe der Weiterverarbeitungsstation, mit der gleichen Geschwindigkeit bewegt werden wie das Transportband.

Das erfindungsgemäß vorgeschlagene Verfahren ermöglicht ein universelles Überführen von Sektflaschendrahtbügeln, sowohl was die Anordnung der Drahtbügelaufgabestation betrifft als auch die Art und Weise, in der die Sektflaschendrahtbügel auf das Transportband aufgegeben werden. So besteht zunächst die Möglichkeit, gleichzeitig eine beliebige Anzahl von Sektflaschendrahtbügeln auf das Transportband aufzusetzen. In aller Regel wird es sich dabei anbieten, jeweils eine im Behältnis oder auf der tablettartigen Transporteinheit der Palette angeordnete Reihe von Sektflaschendrahtbügeln auf dem kontinuierlich angetriebenen Transportband abzulegen, das Transportband kann sich dabei in einer Ebene gerade oder gekrümmt erstrecken oder aber auch über ein unterschiedliches Höhenniveau, wobei es aus Platzgründen für zweckmäßig erachtet wird, das Transportband bei der Überbrückung unterschiedlicher Höhenniveaus im wesentlichen horizontal oder vertikal gerichtet anzuordnen.

Der Transport der Sektflaschendrahtbügel nach oben erfolgt zweckmäßig durch taktweises Aufbringen von Magnetkraft auf die Drahtbügel entlang deren Transportrichtung. Hierzu kann im unteren, im wesentlichen horizontalen Bereich des Transportbandes ein Elektromagnet in Förderrichtung des Transportbandes und entgegengesetzt bewegbar angeordnet sein, der geringfügig beabstandet zu den Drahtbügeln positioniert und taktweise aktivierbar ist. In nicht aktiviertem Zustand wird der Elektromagnet entgegen der Bewegungsrichtung des Transportbandes zurückverfahren und dann im Umkehrpunkt der Bewegung aktiviert, so daß er beim anschließenden Bewegen in der Bewegungsrichtung des Transportbandes die von ihm angezogenen Sektflaschendrahtbügel mitnimmt und diese die in Bewegungsrichtung vor ihnen befindlichen Sektflaschendrahtbügel voranschieben, unabhängig davon, ob sie sich in einem mehr oder weniger horizontalen oder gar vertikalen Abschnitt des Transportbandes befinden. Wegen des taktweisen Aufsatzes der Sektflaschendrahtbügel auf das Transportband sollte gewährleistet sein, daß die Vorschubgeschwindigkeit des Elektromagneten etwa so groß ist wie die Geschwindigkeit des Transportbandes, ferner sollte die Rücklaufgeschwindigkeit des Elektromagneten so groß wie möglich sein, um so die Lücken zwischen den taktweise hintereinander aufgesetzten Sektflaschendrahtbügeln so gering wie möglich zu halten, wobei diese Lücken schließlich aufgrund des Anstaus der Sektflaschendrahtbügel in der Drahtbügelentnahmestation bis hin zum Elektromagneten geschlossen werden.

Wie vorstehend dargelegt, ist es insbesondere bei dem Transport von Sektflaschendrahtbügeln über ein unterschiedliches Höhenniveau erforderlich, daß die einzelnen Sektflaschendrahtbügel eine lückenlose Reihe bilden. Um dies beispielsweise beim Transport der Drahtbügel von oben nach unten zu gewährleisten, wird vorgeschlagen, ständig eine stationäre Magnetkraft auf einen Teil der Drahtbügel einwirken zu lassen, entsprechendes gilt bei einer Bewegung der Sektflaschendrahtbügel von unten nach oben, bei der diese bei nicht aktiviertem Elektromagneten dazu neigen, zurückzurutschen. Die stationäre Magnetkraft wird zweckmäßig durch Permanentmagnete aufgebracht, deren Kraft ausreicht, ein Zurückrutschen bzw. Weiterrutschen der Sektflaschendrahtbügel zu verhindern, aber die durchaus bei Beaufschlagung des Elektromagneten zum Überführen der Sektflaschendrahtbügel von unten nach oben überwunden werden kann. In diesem Zusammenhang ist es aus der US-A-3 123 198 bekannt, unterhalb eines Transportbandes Permanentmagnete anzuordnen, die dem Zweck dienen, mit relativ großer Geschwindigkeit von seitlich des Transportbandes auf dieses aufgegebene, flache, leichte Metallteile im Aufgabebereich gegen das Transportband zu ziehen.

Das erfindungsgemäß vorgeschlagene Prinzip beruht somit darauf, zwischen der taktweisen Aufgabe der Sektflaschendrahtbügel auf das Transportband bzw. deren taktweise Entnahme von diesem, einen kontinuierlichen Förderverlauf zu schaffen, wobei insbesondere bei einem Transport der Sektflaschendrahtbügel über unterschiedliche Höhenniveaus sicherzustellen ist, daß die jeweiligen Sektflaschendrahtbügel lückenlos transportiert werden.

Das gemäß der Erfindung verwendete Transportband kann als umlaufendes Band ausgebildet sein, wobei unter dem Begriff Band sowohl ein einheitliches, durchgehendes Gebilde als auch eine Transportkette, insbesondere mit profilierter Gliedoberseite verstanden wird. Letztere findet insbesondere dann Verwendung, wenn konkave Krümmungen zu überbrücken sind. In den vertikalen Förderbereichen sowie in den Bereichen konvexer Krümmung sind darüber hinaus vorteilhaft parallel und beabstandet zum Transportband Abdeckungen angeordnet, um so die geförderten Sektflaschendrahtbügel in diesen Bereichen zu führen.

In den Figuren ist die Erfindung an einer Ausführungsform näher verdeutlicht, ohne auf diese beschränkt zu sein.

Es zeigt:

Figur 1 eine räumliche Ansicht der Vorrichtung zum Überführen von Sektflaschendrahtbügeln von einer Drahtbügelaufgabestation zu einer Drahtbügelentnahmestation, in vereinfachter Darstellung,

Figur 2 eine räumliche Ansicht eines Teiles der Transportkette mit profilierter Gliedoberseite, sowie deren Lagerungs- und Führungselemente,

Figur 3 ein Schnitt gemäß der Linie III-III in Figur 1,

Figur 4 eine Ansicht IV gemäß Figur 1 des Transportsystems im konkaven Förderbereich,

Figur 5 eine Ansicht V gemäß Figur 1 des Transportsystems im konvexen Förderbereich und

Figur 6 eine Prinzipsskizze zur Verdeutlichung der Funktion der Drahtbügelentnahmestation.

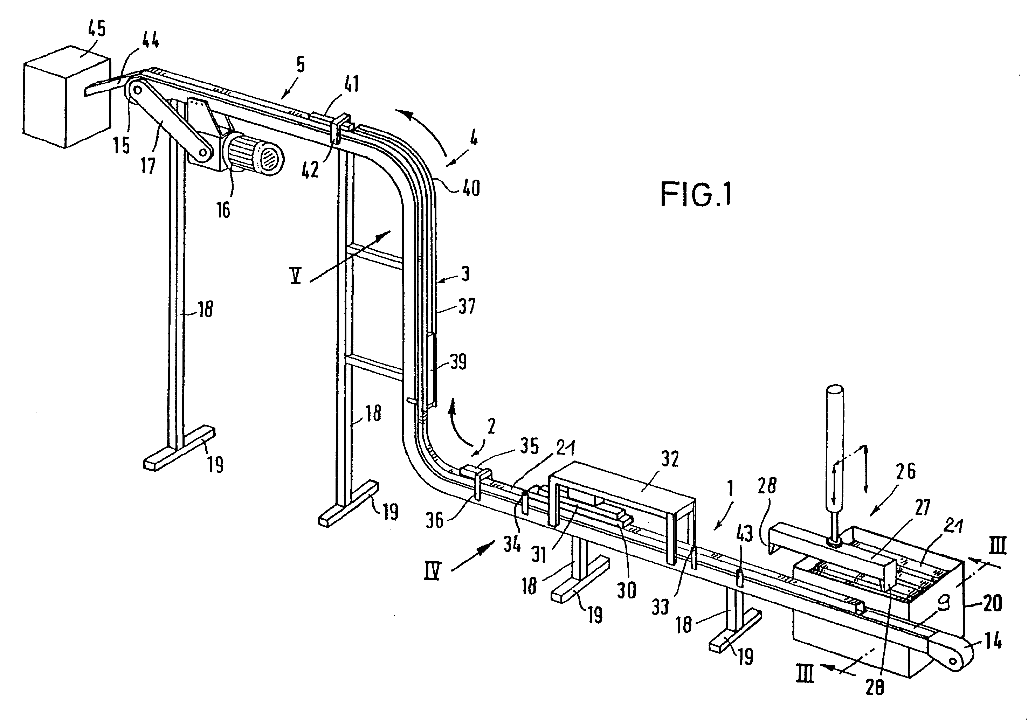

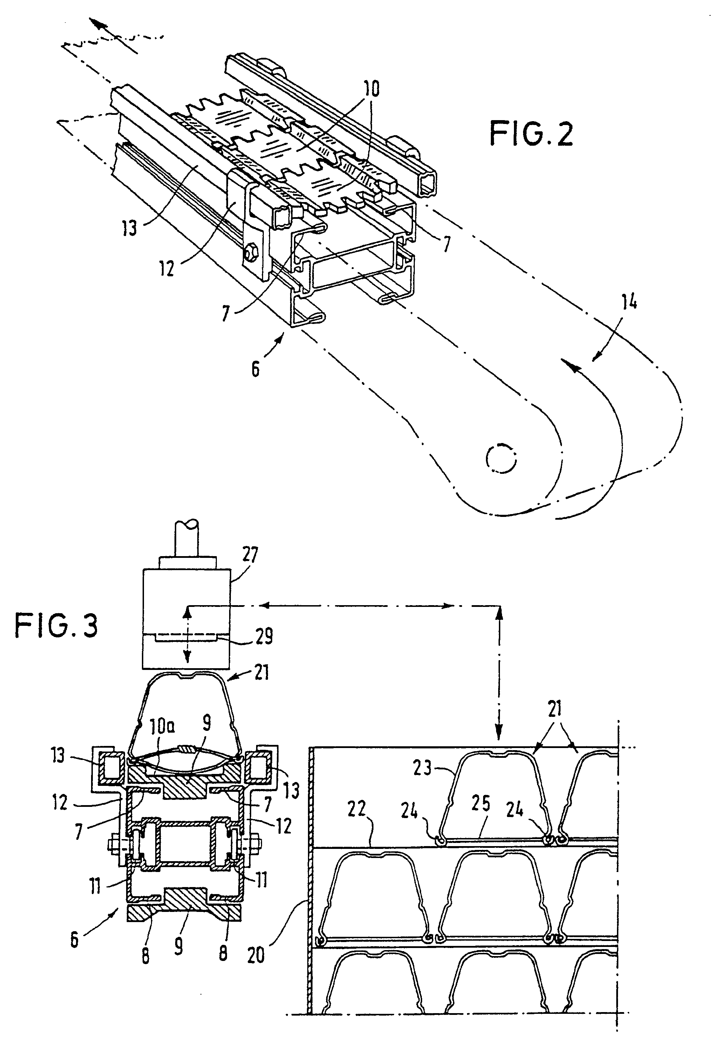

Das gezeigte Transportsystem dient zum Fördern von Sektflaschendrahtbügeln in Form von Bügelverschlüssen von einer unteren, waagerechten Ebene über ein senkrechtes Mittelstück zu einer oberen waagerechten Ebene, wobei der Transport mittels einer umlaufenden Transportkette erfolgt. So zeigt Figur 1 den unteren, waagerechten Führungsabschnitt 1 den sich an diesen anschließenden konkaven Führungsbogen 2, der in den senkrechten Führungsabschnitt 3 mündet, an letzteren schließt sich ein konvexer Führungsbogen 4 an, der sich in der oberen waagerechten Führungsabschnitt 5 fortsetzt. Die Ausbildung der Führungsabschnitte bzw. der Führungsbogen ist der Darstellung der Figuren 2 und 3 näher zu entnehmen, die ein H-förmiges Führungsprofil mit auf die waagerechte Position der Führungsabschnitte bezogen oberen und unteren Gleitansätzen 7 bzw. 8 für die umlaufende Transportkette 9 zeigen. Die Transportkette 9 als solche besteht aus einzelnen Kettensegmenten 10 mit im Bereich der Gliedoberseite eingelassenen, rechteckigen Querschnitt aufweisenden Vertiefungen, wobei die Verschlußdrähte 25 der Sektflaschendrahtbügel 21 in Anlage mit den Bodenbereichen 10a der Vertiefungen gelangen und somit die Sektflaschendrahtbügel 21 mit zur Vertikalen geringfügig geneigter Stellung der Bügel 23 transportiert werden. Die Kettensegmente 10 weisen auf deren Bewegungsrichtung bezogen an ihrem vorderen und hinteren Ende ein Sägezahnprofil auf, das mit dem entsprechenden Profil des jeweils benachbarten Kettensegmentes 10 in Eingriff gelangt. Durch die Ausbildung der Kettensegmente 10 können mittels des Transportbandes unkompliziert Kurven in einer Ebene oder Übergänge von der Waagerechten zur Vertikalen und umgekehrt gefahren werden. Beidseitig weist das H-förmige Führungsprofil 6 sich in dessen Längsrichtung erstreckende Führungsnuten 11 auf, in denen Haltestege 12 befestigt sind, die beidseitig der auf den oberen Gleitansätzen 7 aufliegenden Transportkette 9 Führungsschienen 13 halten. Das Führungsprofil 6 als solches mit den seitlichen Führungsschienen 13 und die Ausbildung der einzelnen Kettensegmente 10 ist, mit Ausnahme der speziell profilierten Gliedoberseite, bekannt.

Das Fördersystem besitzt am Anfang des unteren waagerechten Führungsabschnittes 1 eine Umlenkeinheit 14 für die Transportkette 9, desgleichen am Ende des oberen waagerechten Führungsabschnittes 5 eine Umlenkeinheit 15. Unterhalb des oberen waagerechten Führungsabschnittes 5 ist ein elektromotorischer Antrieb 16 mit diesem befestigt, der über eine Kette 17 eine in der Umlenkeinheit 15 angeordnete, nicht näher dargestellte Antriebswelle für die Transportkette 9 antreibt, wobei die Kettenlaufrichtung mit den in den konvexen und konkaven Abschnitten gezeigten Pfeilrichtungen übereinstimmt. Das Transportsystem ist auf einem Traggestell gelagert, das aus einer Mehrzahl von Ständern 18 mit senkrecht zu diesen angeordneten Füßen 19 besteht.

Im Betrieb des Transportsystems läuft die Transportkette 9 mit gleichbleibender Geschwindigkeit um. Am Anfang des unteren waagerechten Führungsabschnittes 1 befindet sich seitlich neben diesem ein kistenförmiges Behältnis 20, beispielsweise ein Pappkarton, in dem mehrere Reihen von Bügelverschlüssen parallel zur Längserstreckung des Führungsabschnittes 1 nebeneinander auf einer Zwischenlage 22 angeordnet sind, die sich ihrerseits auf mehreren Lagen weiterer Bügelverschlüsse 21 mit dazwischen befindlichen Zwischenlagen 22 abstützt. Die Bügelverschlüsse 21 selbst weisen einen als Metallstreifen ausgebildeten Bügel 23 auf, der im Bereich seiner beiden Schenkelenden 24 mit Ösen versehen ist, die von Drahtringteilen 25 durchsetzt sind. Bei den im Behältnis 20 jeweils in einer Reihe angeordneten Bügelverschlüssen 21 sind die Bügel 23 im wesentlichen senkrecht orientiert und liegen dicht an dicht, während benachbarte Drahtringteile 25 der Bügelverschlüsse 21 im wesentlichen waagerecht orientiert, schuppenartig hintereinander zu liegen kommen.

Oberhalb des Behältnisses 20 ist eine Greifeinrichtung angeordnet, deren Greifarm 27 parallel zum unteren waagerechten Führungsabschnitt 1 ausgerichtet und in Richtung der in den Figuren 1 und 3 gezeigten Pfeile anheb- und absenkbar sowie seitlich zwischen dem Führungsabschnitt 1 und dem Behälter 20 hin- und herverfahrbar ist. Der Greifarm 27 wird an seinem vorderen und hinteren Ende 28 durch nach unten reichende keilförmige Ansätze 28 begrenzt, der lichte Abstand zwischen den Ansätzen 28 ist dabei so bemessen, daß zwischen diesen eine Reihe von Bügelverschlüssen 21 aufgenommen werden kann, wobei selbstverständlich die Längenerstreckung des Greifarmes 28 so bemessen ist, daß er in den Behälter 20 abgesenkt werden kann. An seiner Unterseite weist der Greifarm 27 einen Elektromagneten 29 auf. Zum Beschicken der Transportkette 9 mit Bügelverschlüssen 21 wird die Greifeinrichtung 26 mit dem Greifarm 27 über eine im Behälter 20 angeordnete Reihe von Bügelverschlüssen 21 verfahren und auf diese abgesenkt. Es wird dann der Elektromagnet 29 aktiviert, die Greifeinrichtung 26 angehoben, in eine Position oberhalb der Transportkette 9 verfahren un der Greifarm 27 mit den Bügelverschlüssen 21 so weit abgesenkt, bis diese auf der umlaufenden Transportkette 9 zu liegen kommen. Anschließend wird der Elektromagnet 29 reaktiviert und die Greifeinrichtung 26 wieder zum Behälter 20 verfahren, um diesem die nächste Reihe von Bügelverschlüssen 21 zu entnehmen, wobei an der Unterseite des Greifarmes 27 zusätzlich Saugnäpfe vorgesehen sein können, die nach dem Entfernen aller Bügelverschlüsse 21 von einer Zwischenlage 22 diese abheben und ablegen, bevor die auf der darunterliegenden Zwischenlage 22 befindlichen Reihen von Bügelverschlüssen 21 entnommen werden.

Auf die kontinuierliche umlaufende Transportkette 9 wird somit jeweils eine Reihe von Bügelverschlüssen 21 taktweise abgesetzt und von der Transportkette 9 abtransportiert. Aufgrund der relativ hohen Umlaufgeschwindigkeit der Transportkette 9 und der nachfolgend noch näher zu beschreibenden Widerstände, die von außen auf die auf der Transportkette 9 befindlichen Bügelverschlüsse 11 ausgeübt werden, stauen sich die Bügelverschlüsse 21 nach deren Ablage auf der Transportkette 9.

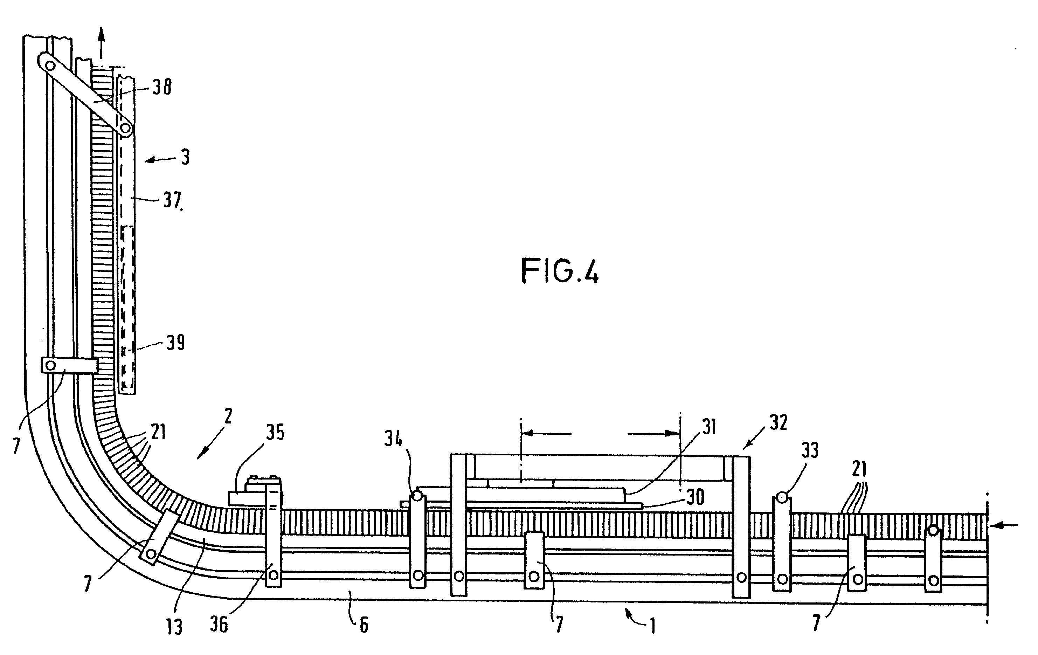

Etwa in der zweiten Hälfte des unteren waagerechten Führungsabschnittes 1 ist ein in Längsrichtung dieses Abschnittes verfahrbarer plattenförmiger Elektromagnet 30 angeordnet. Die Platte 30 entspricht in ihrer Länge dabei der zur Vertikalförderung zusätzlich die Transportkette unterstützenden, erforderlichen Magnetkraft. Die Platte 30 des Elektromagneten ist in einer darüber befindlichen Vorschubeinheit 31 gelagert, die ihrerseits in einem mit dem waagerechten Führungsabschnitt 1 verbundenen Gestell 32 geführt ist, so daß die längliche Magnetplatte 30 entsprechend der Bewegung der Vorschubeinheit 31 vor- und zurückbewegt werden kann. Die Figuren 1 und 4 verdeutlichen desweiteren vor und hinter dem Gestell 32 angeordnete Sensoren zur Steuerung der Vorschubbewegung des Elektromagneten. Da mittels der Transportkette 9 allein die Bügelverschlüsse 21 nicht auf das durch den Führungsabschnitt 5 vorgegebene obere Niveau gefördert werden können, wird die Vorschubkraft auf die Bügelverschlüsse 21 mittels der Vorschubeinheit 31 und des Elektromagneten 30 aufgebracht, indem der Elektromagnet 30 durch die Vorschubeinheit 31 so weit zurückgefahren wird, bis der Elektromagnet 30 den Sensor 33 aktiviert, dieser steuert die Vorschubeinheit 31 um, im Punkt der Umsteuerung wird der Elektromagnet 30 aktiviert, er zieht die unter ihm befindlichen Bügelverschlüsse 21 an, die Vorschubeinheit 31 bewegt sich dann in Richtung der Transportkette 9 bis zum Erreichen des Sensors 34, der die Vorschubeinheit 31 wieder im Sinne einer Rückwärtsbewegung umsteuert und dabei gleichzeitig den Elektromagneten 30 außer Wirkung setzt, bei Erreichen der hinteren Position erfolgt wieder das Umsteuern der Vorschubeinheit 31 und das Aktivieren des Elektromagneten 30, dieser schiebt die anschließenden und damit alle vor diesen befindlichen Bügelverschlüsse 21 weiter in Richtung des konkaven Führungsbogens 2.

Vor Erreichen des konkaven Führungsbogens 2 ist ein Permanentmagnet 35 angeordnet, der verhindern soll, daß bei nicht aktiviertem Elektromagneten 30 und Stillstand der Transportkette 9, die im senkrechten Führungsabschnitt 3 und im konkaven Führungsbogen 2 der Förderkette 9 befindlichen Bügelverschlüsse 21 nach unten rutschen. Der Permanentmagnet 35 ist in einem mit dem Führungsprofil verbundenen Bügel 36 in geringfügigem Abstand von der oberen Begrenzung der Bügelverschlüsse 21 gelagert.

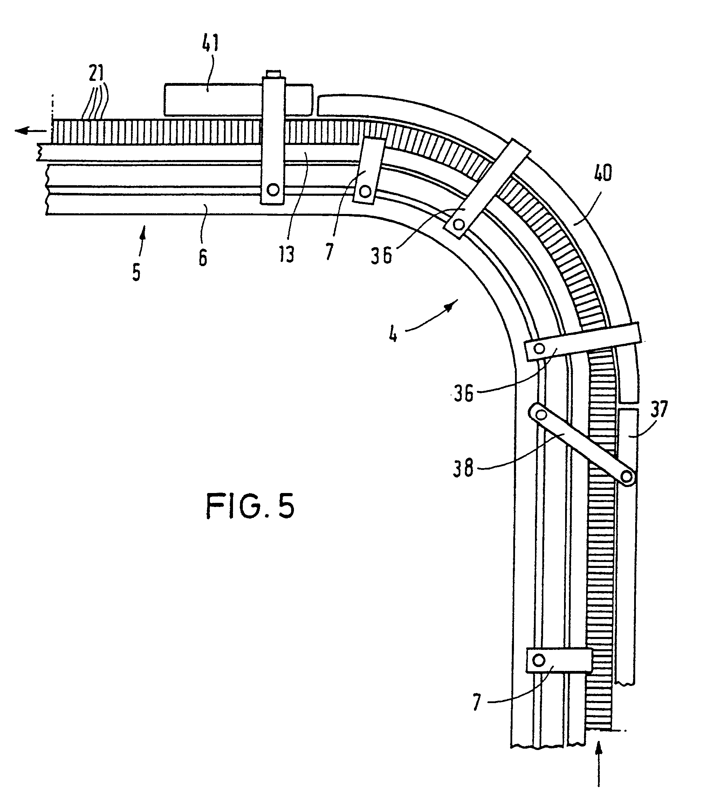

Der senkrechte Abschnitt 3 ist, wie insbesondere den Figuren 1, 4 und 5 zu entnehmen ist, mit einer senkrechten Abdeckung 37 versehen, die gleichfalls über einen Bügel 38 im Führungsprofil 6 gelagert ist, der Abstand zwischen der durch den Bügel 38 fixierten Abdeckung 27 und der Transportkette 9 ist so bemessen, daß die Bügelverschlüsse 21 möglichst reibungsfrei vertikal zwischen den Teilen gefördert werden können. Zusätzlich ist die senkrechte Abdeckung 37 an ihrem unteren Ende mit mehreren Permanentmagnetstäben 39 versehen, die sicherstellen, daß die im vertikalen Bereich befindlichen Bügelverschlüsse 21 nicht mit ihrem vollen Gewicht auf die im konkaven Führungsbogen 2 befindlichen Bügelverschlüsse 21 einwirken.

Der sich an den senkrechten Führungsabschnitt 3 anschließende konvexe Führungsbogen 4 ist mit einer entsprechenden konvex ausgebildeten Abdeckschiene 40 versehen. Im Anschluß an die konvexe Kurve schließt sich im oberen waagerechten Führungsabschnitt 5 der Förderkette 9 ein Elektromagnet 41 an, der in geringfügigem Abstand von der oberen Begrenzung der Bügelverschlüsse 21 in einem Bügel 42 gehalten ist, der seinerseits mit dem Führungsprofil 6 verbunden ist. Der Elektromagnet 41 wird von einem Sensor 43 angesteuert, der vor dem in der unteren Ebene befindlichen Elektromagneten 30 bzw. vor dem Sensor 33 des Elektromagneten 30 angeordnet ist, der Sensor 43 und der im oberen Bereich angeordnete Elektromagnet 41 dienen dem Zweck, den konkaven und konvexen Führungsbogen 3 bzw. 4 sowie den senkrechten Führungsabschnitt 3 stets lückenlos mit Bügelverschlüssen 1 belegt zu halten. So führt eine Unterbrechung der Zufuhr von Bügelverschlüssen 21 mittels der Greifeinrichtung 26 dazu, daß der Sensor 43 aktiviert wird, der seinerseits den Elektromagneten 41 beaufschlagt, die Kraft des Elektromagneten 41 ist dabei so bemessen, daß bei dessen Aktivierung kein Vorschub der Bügelverschlüsse 21 mittels des in der unteren Ebene befindlichen Elektromagneten 30 und der Transportkette 9 möglich ist und damit nur die in Förderrichtung hinter dem Elektromagneten 41 befindlichen Bügelverschlüsse 21 weiter befördert werden können.

Schließlich ist im Bereich der Umlenkeinheit 15 eine Rutsche 44 mit U-förmigem Querschnitt angeordnet, auf die die Bügelverschlüsse 21 in Reihe verbracht werden, so daß sie in eine in Figur 1 als Black-Box gezeigte Entnahmestation 45 gelangen, in der in bekannter Art und Weise mittels einer Zangenabteilung jeweils der erste Bügelverschluß von den nachfolgenden separiert und einer Verschließvorrichtung zugeführt wird.

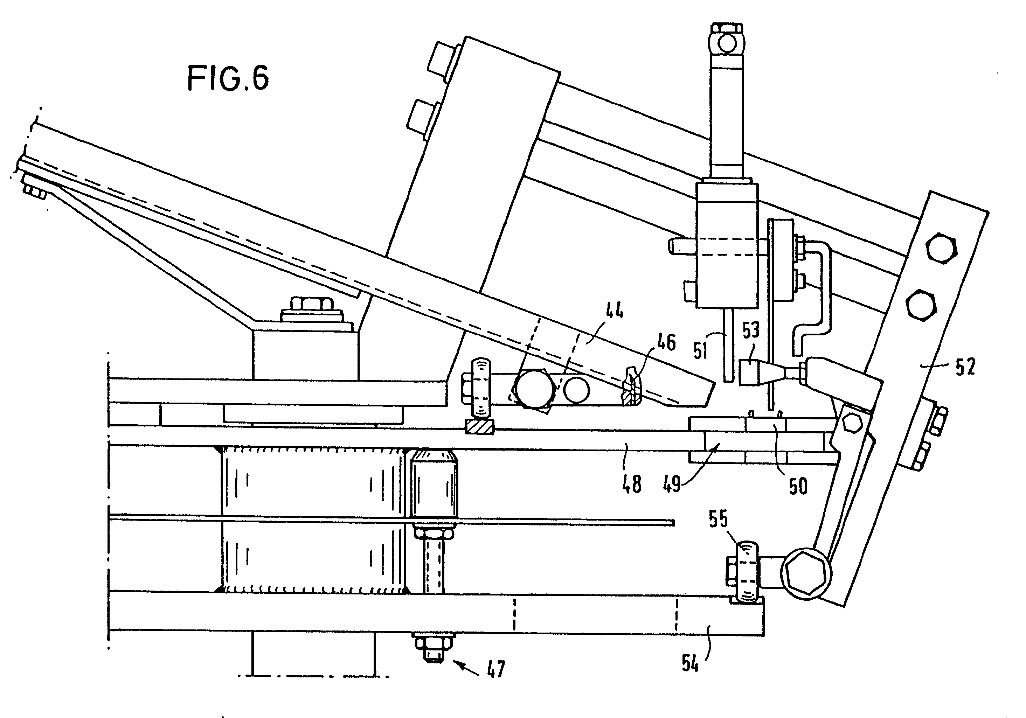

Figur 6 zeigt in stark vereinfachter Darstellung den prinzipiellen Aufbau der Entnahmestation 45. Am unteren Ende der Rutsche 44 ist eine in den Bewegungsweg nicht näher dargestellter Bügelverschlüsse einführbare Haltenase 46 angeordnet. Unterhalb der Rutsche 44 ist ein Drehteller 47 gelagert, mit einer oberen Drehscheibe 48 mit einer Vielzahl am Umfang angeordneter Aufnahmeplatten, wobei jeder Aufnahmeplatte 49 eine Aufnahmeöffnung 50 für einen Bügelverschluß zugeordnet ist. Oberhalb des Auslaufendes der Rutsche 44 befindet sich ein Winkelhebel 51, der mit einem Schwenkhebel 52 zusammenwirkt, welcher mit als Permanentmagneten ausgebildeten Greifarmen 53 versehen ist. Gesteuert wird die Schwenkbewegung des Schwenkhebels 52 zum Erfassen bzw. Ablegen der Bügelverschlüsse mittels einer unterhalb der Drehscheibe 48 angeordneten Nockenscheibe 54, auf deren nicht näher dargestellten Nocken eine beabstandet zum Schwenkpunkt des Schwenkhebels 52 angeordnete Rolle 55 abläuft. Die Bügelverschlüsse rutschen in Reihe die Rutsche 44 hinab, es stößt der erste Bügelverschluß gegen den Winkelhebel 51, gleichzeitig wird die Haltenase 46 ausgefahren und damit der erste Bügelverschluß von den nachfolgenden separiert. Der Greifarm 53 des Schwenkhebels 52 ergreift diesen Bügelverschluß und führt ihn in die Aufnahmeöffnung 50 der Aufnahmeplatte 49 ein. Von unten wird dann eine gefüllte und verkorkte Sektflasche in die Aufnahmeöffnung 50 eingeführt und durch eine nicht näher dargestellte Verschließvorrichtung verschlossen. Beim Verdrehen des Drehtellers 47 um einen Kreissektor, der dem Abstand benachbarter Aufnahmeöffnungen 50 entspricht, erfolgt das Abtrennen des nachfolgenden Bügelverschlusses, dessen Zuführen in die Aufnahmeöffnung 50 der nachfolgenden Aufnahmeplatte 49 usw..

Die zuvor geschilderte Erfindung ist nicht auf den Transport von Sektflaschendrahtbügeln in Form von Bügelverschlüssen beschränkt. Es besteht genauso die Möglichkeit, anders gestaltete Sektflaschendrahtbügel, beispielsweise Vierdrahtverschlüsse zu transportieren, bei diesen ist jedoch davon auszugehen, daß die einzelnen Verschlüsse ineinandergesteckt liegend auf der Transportkette 9 befördert werden, das heißt es wären in diesem Fall die Drahtringteile 25 im wesentlichen senkrecht orientiert. Die Erfindung ist darüber hinaus nicht auf das Fördern von Sektflaschendrahtbügeln von einer unteren Ebene auf eine obere Ebene beschränkt, sie kann gleichwohl in vereinfacher Ausbildung Anwendung finden für einen Transport von einer oberen Ebene in eine untere Ebene oder sogar bei einem Transport in einer Ebene. Bei einem Transport von oben nach unten könnte auf die Vorschubeinheit 31 mit dem Elektromagneten 30 verzichtet werden, darüber hinaus müßte der Sensor 43 in der oberen Ebene, hingegen der Elektromagnet 41 in der unteren Ebene vertauscht angeordnet werden.

## Ansprüche

1. verfahren zum Überführen von Sektflaschendrahtbügeln von einer Drahtbügelaufgabestation zu einer Weiterverarbeitungsstation mittels eines Transportbandes, wobei die Drahtbügel mittels einer der Drahtbügelaufgabestation zugeordneten Beschickungsvorrichtung taktweise auf das Transportband aufgesetzt werden, das Transportband kontinuierlich angetrieben wird und die Drahtbügel im Bereich der Weiterverarbeitungsstation aufgestaut und von einer der Weiterverarbeitungsstation zugeordneten Entnahmevorrichtung taktweise vom Transportband entnommen werden, und wobei zwischen der taktweisen Aufgabe der Drahtbügel auf das Transportband und deren taktweisen Entnahme von diesem ein kontinuierlicher, lückenloser Förderverlauf erfolgt.

2. verfahren nach Anspruch 1, **dadurch gekennzeichnet**, daß gleichzeitig eine vielzahl von Drahtbügeln auf das Transportband aufgesetzt werden.

3. verfahren nach Anspruch 1 oder 2, **dadurch gekennzeichnet**, daß sich das Transportband über ein unterschiedliches Höhenniveau erstreckt.

4. verfahren nach Anspruch 3, **dadurch gekennzeichnet**, daß die Förderrichtung des Transportbandes im wesentlichen horizontal oder vertikal gerichtet ist.

5. verfahren nach Anspruch 3 oder 4, **dadurch gekennzeichnet**, daß der Transport der Drahtbügel nach oben durch taktweises Aufbringen von Magnetkraft auf die Drahtbügel entlang deren Transportrichtung unterstützt wird.

6. verfahren nach Anspruch 5, **dadurch gekennzeichnet**, daß im unteren, im wesentlichen horizontalen Bereich des Transportbandes ein Elektromagnet in Förderrichtung des Transportbandes und entgegengesetzt bewegbar ist, der geringfügig beabstandet zu den Drahtbügeln positioniert und taktweise aktivierbar ist.

7. verfahren nach einem der Ansprüche 3 bis 6, **dadurch gekennzeichnet**, daß zum Bremsen der Abwärtsbewegung der Drahtbügel permanent eine Magnetkraft auf die Drahtbügel einwirkt.

8. verfahren nach Anspruch 7, **dadurch gekennzeichnet**, daß im im wesentlichen vertikalen Bereich des Transportbandes die permanente Magnetkraft auf die Drahtbügel einwirkt.

## Claims

1. Method for transporting wire brackets for bottles of sparkling wine from a wire bracket loading station to a further processing station by means of a transport belt, the wire brackets being placed cyclically on the transport belt by means of a loading device assigned to the wire bracket loading station, the transport belt being driven continuously and the wire brackets being stored in the region of the further processing station and being unloaded cyclically from the transport belt by an unloading device assigned to the further processing station, and a continuous, uninterrupted conveyance taking place between the cyclic loading of the wire brackets onto the transport belt and their cyclic unloading from the latter.

2. Method according to Claim 1, characterized in that a multiplicity of wire brackets are placed simultaneously onto the transport belt.

3. Method according to Claim 1 or 2, characterized in that the transport belt extends over a different height level.

4. Method according to Claim 3, characterized in that the conveying direction of the transport belt is directed essentially horizontally or vertically.

5. Method according to Claim 3 or 4, characterized in that the transport of the wire brackets upwards is supported by cyclic application of magnetic force to the wire brackets along their transport direction.

6. Method according to Claim 5, characterized in that, in the lower, essentially horizontal region of the transport belt, an electromagnet can be moved in the conveying direction of the transport belt and in the opposite direction, which electromagnet is positioned spaced slightly apart from the wire brackets and can be activated cyclically.

7. Method according to one of Claims 3 to 6, characterized in that a magnetic force acts permanently on the wire brackets to brake the downward movement of the wire brackets.

8. Method according to Claim 7, characterized in that the permanent magnetic force acts on the wire brackets in the essentially vertical region of the transport belt.

## Revendications

1. Méthode pour transférer des muselets pour bouteilles de vin mousseux d'un poste d'alimentation à un poste de déchargement au moyen d'une bande transporteuse ; les muselets sont posés de façon cadencée sur la bande transporteuse par un dispositif de chargement affecté au poste de chargement des muselets ; la bande transporteuse fonctionne sans interruption, et les muselets sont resserrés au niveau de la station de travail suivante, et sont déchargés de la bande transporteuse de façon cadencée par un dispositif de déchargement affecté au poste de travail suivant ; entre la distribution cadencée des muselets sur la bande transporteuse, et leur déchargement, leur progression s'effectue de façon continue, sans intervalles laissés vides entre eux.

2. Méthode selon la revendication 1, caractérisée en ce qu'un grand nombre de muselets sont posés simultanément sur la bande transporteuse.

3. Méthode selon la revendication 1 ou 2, caractérisée en ce que la bande transporteuse se déploie à des niveaux de auteur différents.

4. Méthode selon la revendication 3, caractérisée en ce que la direction d'acheminement de la bande transporteuse est pour l'essentiel horizontal ou verticale.

5. Méthode selon la revendication 3 ou 4, caractérisée en ce que la manutention des muselets vers le haut est effectuée par la mise en jeu de façon cadencée d'une force magnétique s'exerçant sur les muselets le long de la direction de leur manutention.

6. Méthode selon la revendication 5, caractérisée en ce qu'à la partie inférieure, dans le secteur essentiellement horizontal de la bande transporteuse, se trouve un électro-aimant déplaçable dans la direction et le sens opposé à celui de la bande transporteuse, qui est logé à une très petite distance des muselets, et qui est excitable de façon cadencée.

7. Méthode selon l'une quelconque des revendications 3 à 6, caractérisée en ce que pour freiner le mouvement vers le bas des muselets une force magnétique s'exerce de façon permanente sur ceux-ci.

8. Méthode selon la revendication 7, caractérisée en ce que dans la partie essentiellement verticale de la bande transporteuse, la force magnétique permanente agit sur les muselets.

FIG.1

EP 0 319 642 B1

FIG.2

10

13

12

7

7

6

14

FIG.3

27

29

21

21

10a

9

23

13

24

25

24

12

22

7

7

12

13

11

11

6

8

9

8

20

FIG.4

EP 0 319 642 B1

FIG. 5

FIG.6

44
46
51
53
52
48
49
50
55
47
54

EP 0 319 642 B1